# EUROPEAN PATENT APPLICATION

(11) **EP 3 604 055 A1**
(43) Date of publication of application: **05.02.2020**
(21) Application number: 18776952.6
(22) Date of filing: 29.03.2018
(51) Int. Cl.: B60T 8/17, B60T 17/18

(54) **VEHICULAR BRAKE SYSTEM**

(30) Priority: 31.03.2017 JP 2017071348
(71) Applicant: Nissin Kogyo Co., Ltd., Tomi-city Nagano 389-0514 (JP); Veoneer Nissin Brake Systems Japan Co., Ltd., Kohoku-ku, Yokohama-shi, Kanagawa 2228580 (JP); Mitsubishi Jidosha Kogyo Kabushiki Kaisha, Tokyo 108-8410 (JP); NTN Corporation, Osaka-shi, Osaka 550-0003 (JP)
(72) Inventor: SATOH, Hiromasa, Tomi-city Nagano 389-0514 (JP); OBIKA, Toshihiro, Yokohama-shi, Kanagawa 222-8580 (JP); KOGA, Yusuke, Yokohama-shi, Kanagawa 222-8580 (JP); TOYOTA, Hiromitsu, Tokyo 108-8410 (JP); KOTERA, Haruo, Tokyo 108-8410 (JP); YAMASAKI, Tatsuya, Iwata-shi Shizuoka 438-8510 (JP); MASUDA, Yui, Iwata-shi Shizuoka 438-8510 (JP)
(74) Representative: Haseltine Lake Kempner LLP
(86) International application number: PCT/JP2018/013433
(87) International publication number: WO 2018/181805

(57) **Abstract**

A highly reliable vehicle brake system that includes an electric brake and achieves redundancy at low cost is provided.

A vehicle brake system (1) includes electric brakes (16a to 16d) that include at least one unit of motors (80 and 81), and first and second control devices (10 and 11) that include a master controller (30) and a first sub-controller (40) that are connected to one another. The master controller (30) includes a driver control unit (301) that can control drivers (61 and 63), and a braking force calculation unit that calculates braking force of the electric brakes (16a to 16d). The first sub-controller (40) includes a driver control unit that controls a driver (60), and a braking force calculation unit that calculates braking force of the electric brakes (16a to 16d). The master controller (30) and the first sub-controller (40) include a determination unit that compares braking force calculation results of other controllers to determine braking force.

## Description

### TECHNICAL FIELD

The present invention relates to a highly reliable vehicle brake system provided with an electric brake.

### BACKGROUND ART

For an electrical control system of a vehicle brake system, there has been suggested a system including two central modules (central control devices), four wheel modules (wheel control devices), and an input device (PTL 1). The two central modules each control two wheel modules. The electrical control system thus mounts a plurality of relatively expensive control devices having the same function, resulting in a tendency of lowering vehicle mountability and becoming a high-cost system due to larger size of the devices.

Further, an electric brake system is suggested, in which a plurality of control devices and a plurality of microcomputers (hereinafter referred to as "microcomputer") are installed (PTL 2). Each of the control devices is provided with two microcomputers for the main control and monitoring, each communicating with each other. The above system, which ensures high redundancy and high reliability, uses a large number of microcomputers, resulting in a tendency of lowering vehicle mountability and becoming high cost due to larger size of the devices.

### CITATION LIST

### PATENT LITERATURE

PTL 1: JP-A-07-009980
PTL 2: JP-A-2001-138882

### SUMMARY OF INVENTION

### TECHNICAL PROBLEM

An object of the invention is to provide a vehicle brake system provided with an electric brake, which is low-cost and has high reliability.

### SOLUTION TO PROBLEM

The invention has been made to achieve at least part of the above object, and can be achieved as the following embodiments or the application examples.
<1> According to one embodiment of the invention, there is provided a vehicle brake system including:
   an electric brake including at least one unit of an electric actuator that presses a friction pad against a rotor side;
   a driver that drives the electric actuator; and
   a control device including a plurality of controllers connected to one another,
   the plurality of controllers including:
      a master controller having a driver control unit that controls the driver, a braking force calculation unit that calculates braking force of the electric brake, and a behavior control unit that controls a behavior of a vehicle; and
      a sub-controller having a driver control unit that controls the driver, and a braking force calculation unit that calculates braking force of the electric brake, and
      each of the master controller and the sub-controller including a determination unit that compares a braking force calculation result of another controller among the plurality of controllers to determine braking force.

   According to one embodiment of the above vehicle brake system, while achieving redundancy due to a use of a plurality of controllers, a cost reduction can be achieved by not mounting a plurality of master controllers, which are relatively expensive.
   Further, according to one embodiment of the above vehicle brake system, the master controller and the sub-controller include a determination unit, to thus achieve redundancy of the system due to separate use of controllers in accordance with the braking force calculation results.
<2> One embodiment of the above vehicle brake system may further include a slave controller having a driver control unit that controls the driver based on a braking force calculation result of at least one of the master controller and the sub-controller.
   According to one embodiment of the above vehicle brake system, a cost reduction can be achieved by using the slave controller, which is inexpensive.
<3> In one embodiment of the above vehicle brake system,
   the control device may include a first control device and a second control device,
   the first control device may include the master controller, and
   the second control device may include the sub-controller and the slave controller.
   According to one embodiment of the above vehicle brake system, the master controller and the sub-controller are mounted on separate control devices to achieve redundancy of the system. A cost reduction can also be achieved by installing the slave controller, which is inexpensive, on the second control device.
<4> In one embodiment of the above vehicle brake system,
   the control device may include a first control device and a second control device,
   the first control device may include at least one unit of the master controller, and
   the second control device may include at least one unit of the sub-controller.
   According to one embodiment of the above vehicle brake system, the master controller and the sub-controller are mounted on separate control devices to achieve redundancy of the system.
<5> In one embodiment of the above vehicle brake system,
   the control device may include a first control device and a second control device,
   the first control device may include, at least, one unit of the master controller and one unit of the sub-controller, and
   the second control device may include at least one unit of the sub-controller.
   According to one embodiment of the above vehicle brake system, the first control device is mounted with the master controller and the sub-controller to improve redundancy and reliability of the first control device.
<6> In one embodiment of the above vehicle brake system,
   the control device may include a first control device and a second control device,
   the first control device may include the master controller and at least two units of the sub-controller, and
   the second control device may include at least one unit of the sub-controller.
   According to one embodiment of the above vehicle brake system, the first control device includes at least two units of the sub-controllers in addition to the master controller to improve redundancy and reliability of the first control device. Further, the two or more units of sub-controllers can reduce the processing burden on the master controller.
<7> In one embodiment of the above vehicle brake system,
   the control device may include a first control device and a second control device,
   the first control device may include the master controller, the sub-controller, and the slave controller, and
   the second control device may include at least one unit of the sub-controller.
   According to one embodiment of the above vehicle brake system, a cost reduction can be achieved by using the slave controller, which is inexpensive.
<8> In one embodiment of the above vehicle brake system,
   the vehicle may be a vehicle with four wheels,
   the electric brake may be provided to each of the four wheels,
   the control device may include a first control device and a second control device,
   the first control device may include at least one unit of the master controller,
   the second control device may include at least two units of the sub-controller, and
   the sub-controller may control the drivers of the electric actuators provided to two of the four wheels that are arranged diagonally.
   According to one embodiment of the above vehicle brake system, a control having the same reliability as the X-piping of the existing hydraulic brake system can be performed.
<9> In one embodiment of the above vehicle brake system, the sub-controller may further control the driver of the electric actuator provided to a front wheel other than the two of the four wheels.

According to one embodiment of the above vehicle brake system, the system can further be redundant.

### BRIEF DESCRIPTION OF DRAWINGS

FIG. 1 is an overall configuration diagram illustrating a vehicle brake system according to an embodiment of the invention.
FIG. 2 is a block diagram illustrating a master controller, first and second sub-controllers, and a first slave controller of a vehicle brake system according to an embodiment of the invention.
FIG. 3 is an overall configuration diagram illustrating a vehicle brake system according to Modified Example 1.
FIG. 4 is a block diagram illustrating a master controller and first to third sub-controllers of the vehicle brake system according to Modified Example 1.
FIG. 5 is an overall configuration diagram illustrating a vehicle brake system according to Modified Example 2.
FIG. 6 is a block diagram illustrating a master controller, first and third sub-controllers, and a slave controller of the vehicle brake system according to Modified Example 2.
FIG. 7 is an overall configuration diagram illustrating a vehicle brake system according to Modified Example 3.
FIG. 8 is a block diagram illustrating a master controller and first and third sub-controllers of the vehicle brake system according to Modified Example 3.

### DESCRIPTION OF EMBODIMENTS

Preferred embodiments of the invention will be described below in detail with reference to the drawings. The drawings used in the description are provided for convenience of explanation. Note that the embodiments described below do not unduly limit the contents of the invention described in the claims. Moreover, all of the elements described below are not necessarily essential requirements of the invention.

A vehicle brake system according to an embodiment of the invention includes an electric brake including at least one unit of an electric actuator that presses a friction pad against a rotor side, a driver that drives the electric actuator, and a control device including a plurality of controllers connected to one another, in which the plurality of controllers includes a master controller having a driver control unit that controls the driver, a braking force calculation unit that calculates braking force of the electric brake, and a behavior control unit that controls a behavior of a vehicle, and a sub-controller having a driver control unit that controls the driver, and a braking force calculation unit that calculates braking force of the electric brake. Each of the master controller and the sub-controller includes a determination unit that compares a braking force calculation result of another controller among the plurality of controllers to determine braking force.

### 1. Vehicle brake system

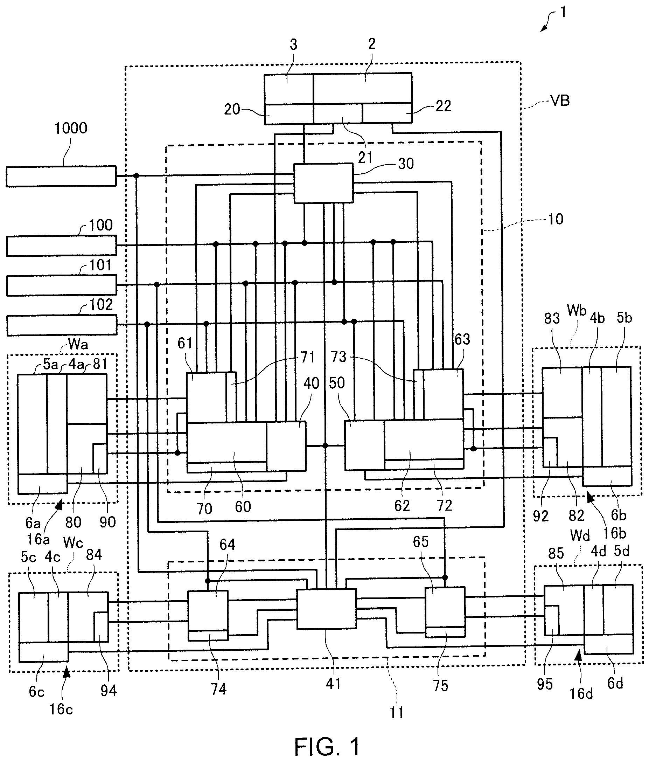

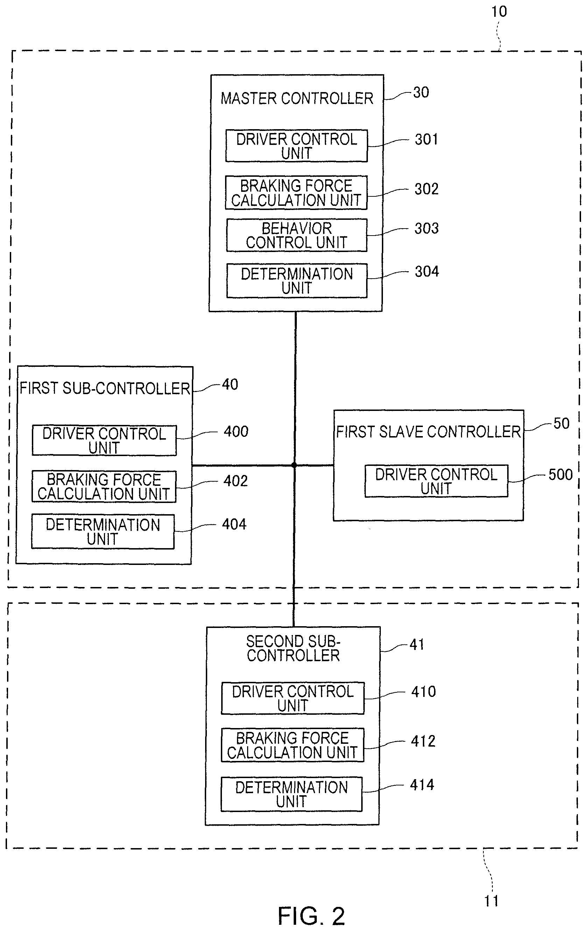

A vehicle brake system 1 according to an embodiment will be described in detail with reference to FIGS. 1 and 2. FIG. 1 is an overall configuration diagram illustrating the vehicle brake system 1 according to the embodiment. FIG. 2 is a block diagram illustrating a master controller 30, first and second sub-controllers 40 and 41, and a first slave controller 50 of the vehicle brake system 1 according to the embodiment.

As illustrated in FIG. 1, the vehicle brake system 1 includes electric brakes 16a to 16d that include at least one unit of motors 80 to 85 being electric actuators that press non-illustrated friction pads against the non-illustrated rotor side, and control devices (10, 11) including drivers 60 to 65 that drive the motors 80 to 85, a plurality of controllers (the master controller 30, the first sub-controller 40, the second sub-controller 41, and the first slave controller 50) connected to one another. The non-illustrated rotors, which are provided to the wheels Wa to Wd of a vehicle VB being a four-wheeled vehicle, rotate integrally with the wheels Wa to Wd. Note that the vehicle VB is not limited to a four-wheeled vehicle. Further, a plurality of motors may be provided to one electric brake, or a plurality of electric brakes may be provided to one wheel.

### 1-1. Electric brake

The electric brake 16a provided to the wheel Wa at the front-wheel left-side (FL) includes a brake caliper 5a, the motors 80 and 81 fixed to the brake caliper 5a via a decelerator 4a, and a load sensor 6a that detects a load applied from the motors 80 and 81 to the non-illustrated friction pads. The motor 80 includes a rotation angle sensor 90 that detects the relative position of the rotation axis with respect to the stator of its own. The motor 81, which is coaxial with the motor 80, does not need a rotation angle sensor. The detection signal from the load sensor 6a is input into the first sub-controller 40, and the detection signal from the rotation angle sensor 90 is input into the drivers 60 and 61.

The electric brake 16b provided to the wheel Wb at the front-wheel right-side (FR) includes a brake caliper 5b, motors 82 and 83 fixed to the brake caliper 5b via a decelerator 4b, and a load sensor 6b that detects a load applied from the motors 82 and 83 to the non-illustrated friction pads. The motor 82 includes a rotation angle sensor 92 that detects the relative position of the rotation axis with respect to the stator of its own. The motor 83, which is coaxial with the motor 82, does not need a rotation angle sensor. The detection signal from the load sensor 6b is input into the first slave controller 50, and the detection signal from the rotation angle sensor 92 is input into the drivers 62 and 63.

The electric brake 16c provided to the wheel Wc at the rear-wheel left-side (RL) includes a brake caliper 5c, the motor 84 fixed to the brake caliper 5c via a decelerator 4c, and a load sensor 6c that detects a load applied from the motor 84 to the non-illustrated friction pads. The motor 84 includes a rotation angle sensor 94 that detects the relative position of the rotation axis with respect to the stator of its own. The detection signal from the load sensor 6c is input into the second sub-controller 41, and the detection signal from the rotation angle sensor 94 is input into the driver 64.

The electric brake 16d provided to the wheel Wd at the rear-wheel right-side (RR) includes a brake caliper 5d, the motor 85 fixed to the brake caliper 5d via a decelerator 4d, and a load sensor 6d that detects a load applied from the motor 85 to the non-illustrated friction pads. The motor 85 includes a rotation angle sensor 95 that detects the relative position of the rotation axis with respect to the stator of its own. The detection signal from the load sensor 6d is input into the second sub-controller 41, and the detection signal from the rotation angle sensor 95 is input into the driver 65.

The brake calipers 5a to 5d are formed in a substantially C-shape, and are integrally provided with a claw portion extending to the opposite side across a non-illustrated rotor.

The decelerators 4a to 4d, which is fixed to the brake calipers 5a to 5d, transmit torque generated by the rotation of the motors 80 to 85 to non-illustrated linear motion mechanisms that are built into the brake calipers 5a to 5d.

The linear motion mechanism can employ a publicly known mechanism in the electric brake. The linear motion mechanism converts the rotation of the motors 80 to 85 into a linear motion of the friction pads via the decelerators 4a to 4d. The linear motion mechanism presses the friction pads against the rotor to suppress the rotation of the wheels Wa to Wd.

The motors 80 to 85 can employ a publicly known electric motor, which is, for example, a brushless DC motor. Driving of the motor 80 to 85 causes the friction pads to move via the decelerators 4a to 4d and the linear motion mechanisms. An example will be described in which a motor is employed as the electric actuator, however, other publicly known actuators may be employed without being limited thereto.

### 1-2. Input device

The vehicle brake system 1 includes a brake pedal 2 being an input device, and a stroke simulator 3 connected to the brake pedal 2. The brake pedal 2 includes a second stroke sensor 21 and a third stroke sensor 22 that detect the operation amount of the brake pedal 2 of the driver. The stroke simulator 3 includes a first stroke sensor 20 that detects the operation amount of the brake pedal 2.

Each of the stroke sensors 20 to 22 mutually independently generates an electrical detection signal corresponding to a depression stroke and/or a depression force being a kind of the operation amount of the brake pedal 2. The first stroke sensor 20 sends the detection signal to the master controller 30 to be described below. The second stroke sensor 21 sends the detection signal to the first sub-controller 40 to be described below. The third stroke sensor 22 sends the detection signal to the second sub-controller 41 to be described below.

The vehicle VB includes, as an input device to the vehicle brake system 1, a plurality of control devices (hereinafter referred to as "other control devices 1000") provided in systems other than the vehicle brake system 1. The other control devices 1000 are connected by Controller Area Network (CAN) to the master controller 30 of a first control device 10 and to the second sub-controller 41 of the second control device 11 to communicate information about brake operation to each other.

### 1-3. Control device

A control device includes the first control device 10 and the second control device 11. The first control device 10 is disposed at a predetermined position on the vehicle VB independently from the second control device 11. The first control device 10 and the second control device 11 are electronic control units (ECUs). Each of the first control device 10 and the second control device 11 is housed in a synthetic resin chassis. Accordingly, redundancy is achieved by the two control devices, which are the first control device 10 and the second control device 11. Note that an example is described in which two control devices are used, but one control device may be used in view of the disposition in the vehicle VB, or three or more may be used to further enhance redundancy.

The first control device 10 and the second control device 11 are connected via CAN, whereby communication is performed. The communication via CAN performs unidirectional and bidirectional information transmissions. Note that a communication between ECUs can be performed without being limited to, via CAN.

The first control device 10 and the second control device 11 are electrically connected to three batteries 100, 101, and 102 that are independent from one another. The batteries 100, 101, and 102 supplies electric power to electronic components included in the first control device 10 and the second control device 11. The batteries 100, 101, and 102 of the vehicle brake system 1 are arranged in predetermined positions in the vehicle VB.

The first control device 10 includes, at least, one unit of the master controller 30 and one unit of the first sub-controller 40, and the second control device 11 includes at least one unit of a sub-controller (the second sub-controller 41). The first control device 10 is mounted with the master controller 30 and the first sub-controller 40 to improve redundancy and reliability in the first control device 10.

The first control device 10 further includes the first slave controller 50. A cost reduction can be achieved by using the first slave controller 50 which is inexpensive. Note that a sub-controller can be provided in place of the first slave controller 50.

The master controller 30, the first and second sub-controllers 40 and 41, and the first slave controller 50 are microcomputers.

The first control device 10 includes the master controller 30, the first sub-controller 40, and the first slave controller 50. The first control device 10, even while achieving redundancy by using a plurality of controllers, can achieve cost reduction by not being mounted with a plurality of master controllers, which are relatively expensive. The master controller 30 needs high performance to provide a behavior control unit 303 (the behavior control unit 303 will be described below), and this causes the master controller 30 to become a relatively expensive controller compared to the first and second sub-controllers 40 and 41.

As illustrated in FIGS. 1 and 2, the master controller 30 includes a driver control unit 301 that controls the drivers 61 and 63, a braking force calculation unit 302 that calculates braking force of the electric brakes 16a to 16d, and the behavior control unit 303 that controls behaviors of the vehicle VB.

The first sub-controller 40 includes a driver control unit 400 that controls the driver 60, and a braking force calculation unit 402 that calculates braking force of the electric brakes 16a to 16d. The second sub-controller 41 includes a driver control unit 410 that controls the drivers 64 and 65, and a braking force calculation unit 412 that calculates braking force of the electric brakes 16a to 16d. The first and second sub-controllers 40 and 41, due to the lack of the behavior control unit, can employ a microcomputer that is less expensive than the master controller 30, thus contributing to a cost reduction.

The first slave controller 50, which does not include a braking force calculation unit, includes a driver control unit 500 that controls the driver 62 based on the braking force calculation results of at least one controller of the master controller 30 and the first and second sub-controllers 40 and 41. The first slave controller 50, which does not include a braking force calculation unit, can employ a relatively inexpensive microcomputer compared to the first and second sub-controllers 40 and 41.

The drivers 60 to 65 control the drives of the motors 80 to 85. Specifically, the driver 60 controls the drive of the motor 80, the driver 61 controls the drive of the motor 81, the driver 62 controls the drive of the motor 82, the driver 63 controls the drive of the motor 83, the driver 64 controls the drive of the motor 84, and the driver 65 controls the drive of the motor 85. The drivers 60 to 65 control the motors 80 to 85 by sinusoidal drive scheme, for example. The drivers 60 to 65 may also control, for example, by square-wave current, without being limited to sinusoidal drive scheme.

The drivers 60 to 65 include a power supply circuit and an inverter that supply electric power being commensurate with the commands from the driver control units 301, 400, 410, and 500 to the motors 80 to 85.

The braking force calculation units 302, 402, and 412 calculate braking force (required value) based on a detection signal from each of the stroke sensors 20 to 22, which is commensurate with the operation amount of the brake pedal 2. The braking force calculation unit 302, 402, and 412 can also calculate braking force (required value) based on a signal from other control devices 1000.

The driver control units 301, 400, 410, and 500 control the drivers 60 to 65 based on the braking forces (the required values) calculated by the braking force calculation units 302, 402, and 412 and detection signals from the load sensors 6a to 6d. The drivers 60 to 65 supply driving sinusoidal currents to the motors 80 to 85 in accordance with commands from the driver control units 301, 400, 410, and 500. The currents supplied to the motors 80 to 85 are detected by current sensors 70 to 75.

The behavior control unit 303 outputs signals for controlling behaviors of the vehicle VB to the driver control units 301, 400, 410, and 500. The above behaviors are other than simple braking behaviors in response to the operation of the brake pedal 2 of normal, that are, for example, Antilock Brake System (ABS), which is a control for preventing locking of the wheels, Traction Control System (TCS), which is a control for suppressing slippage of the wheels Wa to Wd, and a behavior stabilization control, which is a control for suppressing sideslip of the vehicle VB.

The master controller 30 and the first and second sub-controllers 40 and 41 include determination units 304, 404, and 414 that compare the braking force calculation results of other controllers to determine braking force. The master controller 30 and the first and second sub-controllers 40 and 41, which include the determination units 304, 404, and 414, separately use the controllers (30, 40 and 41) in accordance with the results of the braking force calculation, to thus achieve redundancy of the vehicle brake system 1.

The determination units 304, 404, and 414 compare the braking force calculation results of other controllers to determine braking force. The other controllers are the first sub-controller 40 and the second sub-controller 41 for the determination unit 304, the master controller 30 and the second sub-controller 41 for the determination unit 404, and the master controller 30 and the first sub-controller 40 for the determination unit 414. For example, the determination units 304, 404, and 414 compare the calculation result of the braking force calculation unit 302 of the master controller 30, the calculation result of the braking force calculation unit 402 of the first sub-controller 40, and the calculation result of the braking force calculation unit 412 of the second sub-controller 41 to determine, by majority decision, which calculation result will be used as the braking force. For example, in a case where the calculation result of the braking force calculation unit 402 is solely different from the other calculation results, the master controller 30 controls the driver 61 and the driver 63 based on the calculation results of the braking force calculation unit 302 and the braking force calculation unit 412. That is, the determination unit 304, 404, and 414 make the vehicle brake system 1 redundant.

According to the vehicle brake system 1, the first control device 10 and the second control device 11 can individually control the front and rear wheels to improve the controllability.

### 2. Modified Example 1

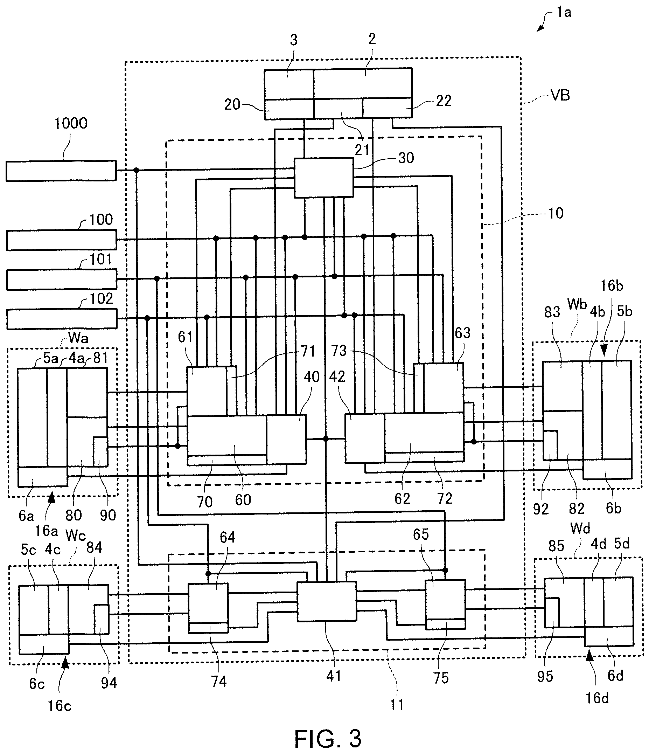

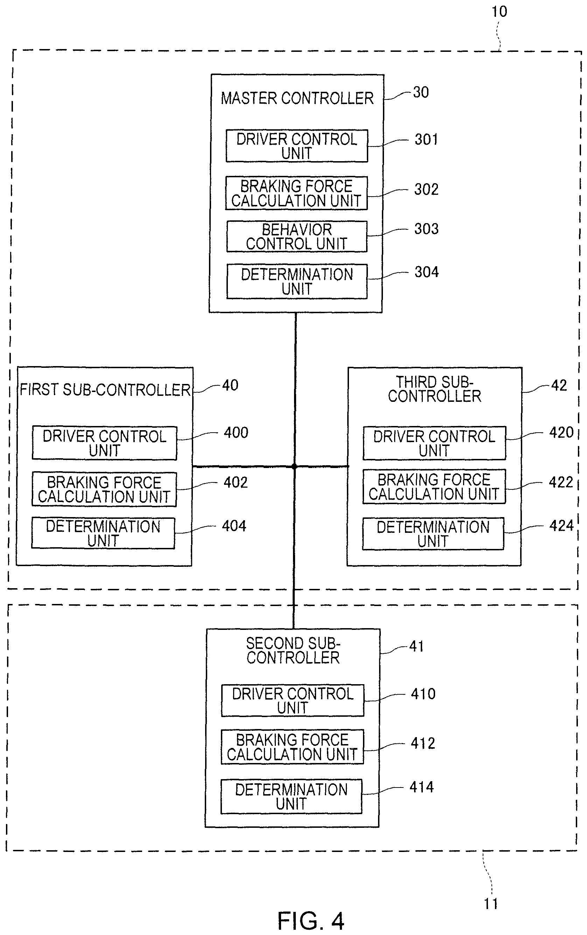

A vehicle brake system 1a according to Modified Example 1 will be described with reference to FIGS. 3 and 4. FIG. 3 is an overall configuration diagram illustrating the vehicle brake system 1a according to Modified Example 1. FIG. 4 is a block diagram illustrating a master controller 30 and first to third sub-controllers 40 to 42 of the vehicle brake system 1a according to Modified Example 1. In the following descriptions, the same components as in the vehicle brake system 1 of FIGS. 1 and 2 are denoted by the same reference signs in FIGS. 3 and 4, and detailed descriptions thereof will be omitted.

As illustrated in FIGS. 3 and 4, in the vehicle brake system 1a, a control device includes a first control device 10 and a second control device 11.

The first control device 10 includes the master controller 30 and at least two sub-controllers (the first sub-controller 40 and the third sub-controller 42). That is, the third sub-controller 42 is provided in place of the first slave controller 50 in the vehicle brake system 1 in FIG. 1. The third sub-controller 42, which is a microcomputer, includes a driver control unit 420, a braking force calculation unit 422, and a determination unit 424 that are configured in the same manner as the first sub-controller 40, and controls the electric brake 16b. The driver control unit 420 controls the driver 62. The second control device 11 includes at least one unit of a sub-controller (the second sub-controller 41). The third stroke sensor 22 sends a detection signal to the second sub-controller 41 and the third sub-controller 42.

The first control device 10 is mounted with at least two sub-controllers (the first sub-controller 40 and the third sub-controller 42) in addition to the master controller 30 to improve redundancy and reliability of the first control device 10. That is, in the first control device 10, the determination unit 304 of the master controller 30, the determination unit 404 of the first sub-controller 40, and the determination unit 424 of the third sub-controller 42 determine, by majority decision, which calculation result will be used as the braking force. Note that, in terms of redundancy, the first control device 10 may include three or more units of sub-controllers, and the second control device 11 may include two or more units of sub-controllers.

In addition, the provision of two or more units of sub-controllers (the first sub-controller 40 and the third sub-controller 42) can reduce the burden on the master controller 30. This is because the third sub-controller 42 can control the electric brake 16b by itself.

### 3. Modified example 2

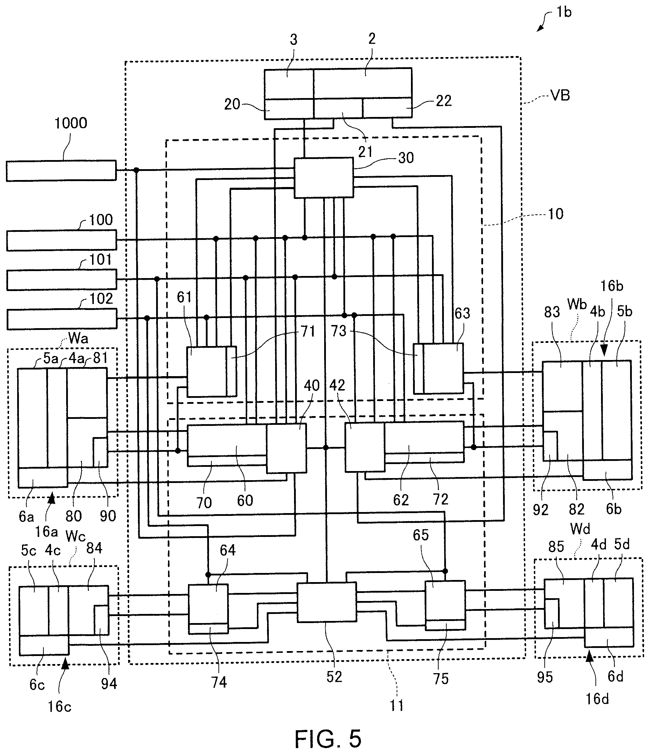

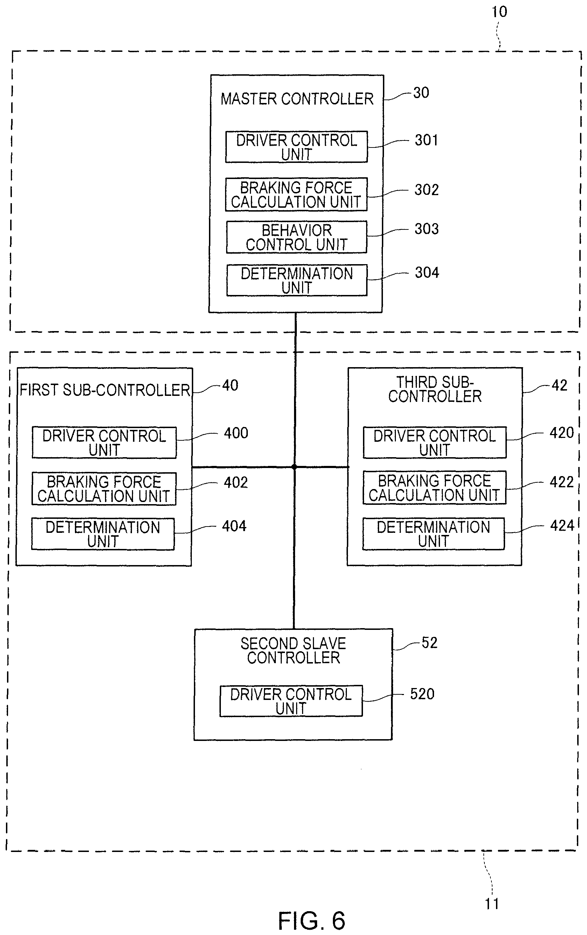

A vehicle brake system 1b according to Modified Example 2 will be described with reference to FIGS. 5 and 6. FIG. 5 is an overall configuration diagram illustrating the vehicle brake system 1b according to Modified Example 2. FIG. 6 is a block diagram illustrating a master controller 30, first and third sub-controllers 40 and 42, and a second slave controller 52 of the vehicle brake system 1b according to Modified Example 2. In the following descriptions, the same components as in the vehicle brake system 1 of FIGS. 1 and 2 are denoted by the same reference signs in FIGS. 5 and 6, and detailed descriptions thereof will be omitted.

As illustrated in FIGS. 5 and 6, in the vehicle brake system 1b, a control device includes a first control device 10 and a second control device 11.

The first control device 10 includes the master controller 30. The first control device 10 includes drivers 61 and 63 that are controlled by the driver control unit 301 of the master controller 30.

The second control device 11 includes the first and third sub-controller 40 and 42 and the second slave controller 52. In the vehicle brake system 1b according to Modified Example 2, the third sub-controller 42 is disposed in place of the first slave controller 50 that performs braking of the front-wheel right-side (FR) in FIG. 1, and the second slave controller 52 is disposed in place of the second sub-controller 41 that performs braking of the rear wheels (RL, RR) in FIG. 1. The second control device 11 also includes the drivers 60, 62, 64 and 65 and the current sensors 70, 72, 74, and 75. The second slave controller 52 includes a driver control unit 520 that controls the drivers 64 and 65.

The master controller 30 and the first and third sub-controllers 40 and 42 are mounted on separate control devices (the first control device 10 and the second control device 11) to achieve redundancy. This is because the second control device 11, which includes the first and third sub-controllers 40 and 42 provided with the braking force calculation units 402 and 422 and the driver control units 400 and 420, and the second slave controller 52 provided with the driver control unit 520, can perform braking of the four wheels Wa to Wd.

Further, the second control device 11 is mounted with the second slave controller 52, and thus the vehicle brake system 1b can be simplified in its entirety to achieve cost reduction. That is, the second slave controller 52, which is relatively inexpensive compared to the first and third sub-controllers 40 and 42, is employed to eliminate an expensive sub-controller.

The first control device 10 includes at least one unit of the master controller 30, and the second control device 11 includes at least one unit of sub-controllers (the first sub-controller 40 and the third sub-controller 42). The master controller 30 and the first and third sub-controllers 40 and 42 are mounted on separate control devices to achieve redundancy of the vehicle brake system 1b. Note that, in terms of redundancy, the first control device 10 may further include the master controller 30, and the second control device 11 may further include a sub-controller.

### 4. Modified example 3

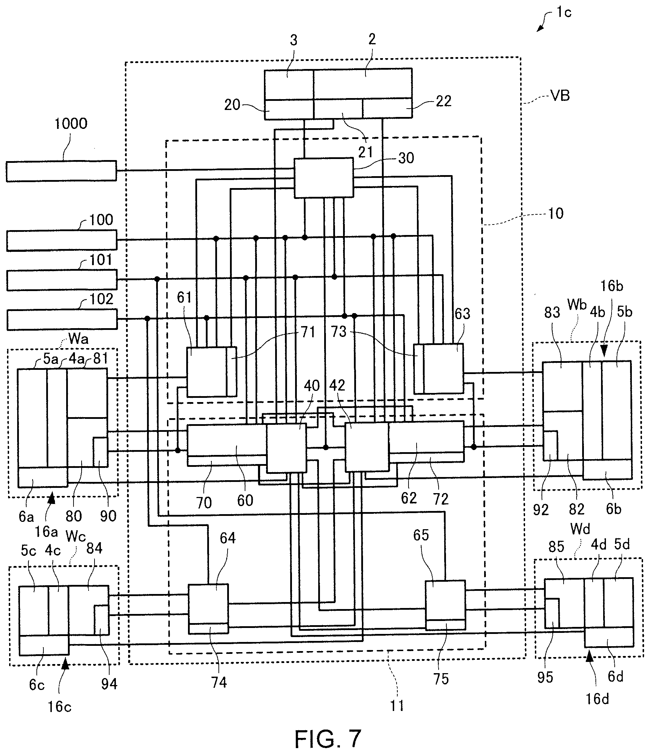

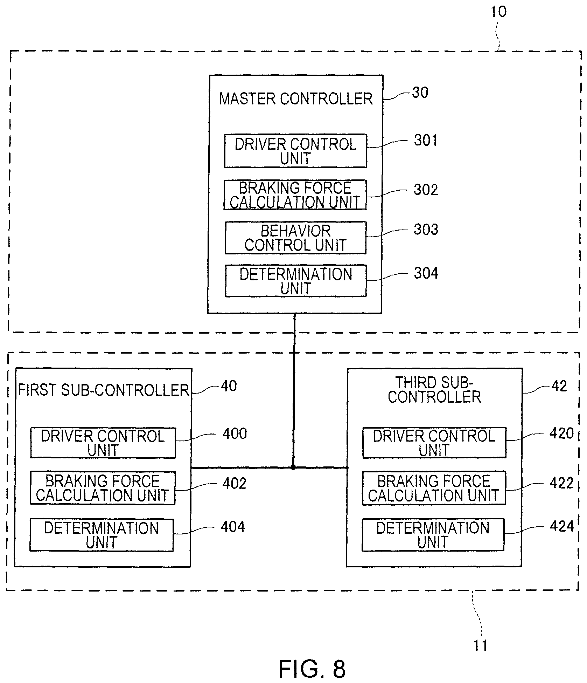

A vehicle brake system 1c according to Modified Example 3 will be described with reference to FIGS. 7 and 8. FIG. 7 is an overall configuration diagram illustrating the vehicle brake system 1c according to Modified Example 3. FIG. 8 is a block diagram illustrating a master controller 30 and first and third sub-controllers 40 and 42 of the vehicle brake system 1c according to Modified Example 3. In the following descriptions, the same components as in the vehicle brake system 1 of FIGS. 1 and 2 are denoted by the same reference signs in FIGS. 7 and 8, and detailed descriptions thereof will be omitted.

As illustrated in FIGS. 7 and 8, in the vehicle brake system 1c, the vehicle VB is a four-wheeled vehicle, and the electric brakes 16a to 16d are provided to the wheels Wa to Wd, respectively.

A control device includes the first control device 10 and the second control device 11.

The first control device 10 includes at least one unit of the master controller 30. The first control device 10 includes drivers 61 and 63 that are controlled by the driver control unit 301 of the master controller 30.

The second control device 11 includes at least two units of sub-controllers (the first sub-controller 40 and the third sub-controller 42). In terms of redundancy, the second control device 11 may include three or more units of sub-controllers.

The driver control unit 400 of the first sub-controller 40 can control the drivers 60 and 65 of the motors 80 and 85 provided to the two wheels Wa and Wd that are arranged diagonally. The driver control unit 420 of the third sub-controller 42 can control the drivers 62 and 64 of the motors 82 and 84 provided to the two wheels Wb and Wc that are arranged diagonally. The same control can be performed as the X-piping of the existing hydraulic brake.

The driver control unit 400 of the first sub-controller 40 can further control the driver 62 of the motor 82 provided to the front wheel (the front wheel Wb on the right side) in addition to the two wheels Wa and Wd that are arranged diagonally. The driver control unit 420 of the third sub-controller 42 can further control the driver 60 of the motor 80 provided to the front wheel (the front wheel Wa on the left side) in addition to the two wheels Wb and Wc that are arranged diagonally. The electric brakes 16a and 16b of the front wheels Wa and Wb can be redundant.

In the vehicle brake system 1c, the first control device 10 includes at least one unit of the master controller 30, and the second control device 11 includes at least two units of sub-controllers (for example, the first and third sub-controllers 40 and 42). The master controller 30 and the first and third sub-controllers 40 and 42 are mounted on separate control devices (the first control device 10 and the second control device 11) to achieve redundancy.

The invention is not limited to the embodiments described above, and various modifications are possible. For example, the invention includes configurations that are substantially the same (for example, in function, method, and results, or in objective and effects) as the configurations described in the embodiments. The invention also includes configurations in which non-essential elements described in the embodiments are replaced by other elements. The invention also includes configurations having the same effects as those of the configurations described in the embodiments, or configurations capable of achieving the same objectives as those of the configurations described in the embodiments. The invention further includes configurations obtained by adding known art to the configurations described in the embodiments.

### REFERENCE SIGNS LIST

- 1, 1a, 1b, 1c: Vehicle brake system
- 2: Brake pedal
- 3: Stroke simulator
- 4a to 4d: Decelerator
- 5a to 5d: Brake caliper
- 6a to 6d: Load sensor
- 10: First control device
- 11: Second control device
- 16a to 16d: Electric brake
- 20: First stroke sensor
- 21: Second stroke sensor
- 22: Third stroke sensor
- 30: Master controller
- 301: Driver control unit
- 302: Braking force calculation unit
- 303: Behavior control unit
- 304: Determination unit
- 40: First sub-controller
- 400: Driver control unit
- 402: Braking force calculation unit
- 404: Determination unit
- 41: Second sub-controller
- 410: Driver control unit
- 412: Braking force calculation unit
- 414: Determination unit
- 42: Third sub-controller
- 420: Driver control unit
- 422: Braking force calculation unit
- 424: Determination unit
- 50: First slave controller
- 500: Driver control unit
- 52: Second slave controller
- 520: Driver control unit
- 60 to 65: Driver
- 70 to 75: Current sensor
- 80 to 85: Motor
- 90, 92, 94, 95: Rotation angle sensor
- 100 to 102: Battery
- 1000: Other control devices
- VB: Vehicle
- Wa to Wd: Wheel

## Claims

1. A vehicle brake system comprising:
an electric brake including at least one unit of an electric actuator that presses a friction pad toward a rotor side;
a driver that drives the electric actuator; and
a control device including a plurality of controllers connected to one another,
the plurality of controllers including:
a master controller having a driver control unit that controls the driver, a braking force calculation unit that calculates braking force of the electric brake, and a behavior control unit that controls a behavior of a vehicle; and
a sub-controller having a driver control unit that controls the driver, and a braking force calculation unit that calculates braking force of the electric brake, and
each of the master controller and the sub-controller including a determination unit that compares a braking force calculation result of another controller among the plurality of controllers to determine braking force.

2. The vehicle brake system according to claim 1, further comprising
a slave controller having a driver control unit that controls the driver based on a braking force calculation result of at least one of the master controller and the sub-controller.

3. The vehicle brake system according to claim 2, wherein
the control device includes a first control device and a second control device;
the first control device includes the master controller; and
the second control device includes the sub-controller and the slave controller.

4. The vehicle brake system according to claim 1, wherein
the control device includes a first control device and a second control device;
the first control device includes at least one unit of the master controller; and
the second control device includes at least one unit of the sub-controller.

5. The vehicle brake system according to claim 1, wherein
the control device includes a first control device and a second control device;
the first control device includes, at least, one unit of the master controller and one unit of the sub-controller; and
the second control device includes at least one unit of the sub-controller.

6. The vehicle brake system according to claim 1, wherein
the control device includes a first control device and a second control device;
the first control device includes the master controller and at least two units of the sub-controller; and
the second control device includes at least one unit of the sub-controller.

7. The vehicle brake system according to claim 2, wherein
the control device includes a first control device and a second control device;
the first control device includes the master controller, the sub-controller, and the slave controller; and
the second control device includes at least one unit of the sub-controller.

8. The vehicle brake system according to claim 1, wherein
the vehicle is a vehicle with four wheels;
the electric brake is provided to each of the four wheels;
the control device includes a first control device and a second control device;
the first control device includes at least one unit of the master controller;
the second control device includes at least two units of the sub-controller; and
the sub-controller controls the drivers of the electric actuators provided to two of the four wheels that are arranged diagonally.

9. The vehicle brake system according to claim 8, wherein
the sub-controller further controls the driver of the electric actuator provided to a front wheel other than the two of the four wheels.
